# EUROPEAN PATENT APPLICATION

(11) **EP 1 333 073 A1**
(43) Date of publication of application: **06.08.2003**
(21) Application number: 02405054.4
(22) Date of filing: 30.01.2002
(51) Int. Cl.: C09D 11/10, C09D 11/02, B41M 7/00

(54) **Varnishing in line, printed article comprising offset ink layer and lacquer layer**

(71) Applicant: Sipca Holding S.A., 1008 Prilly (CH)
(72) Inventor: Schicker, Francoise, 01200 Lancrans (FR); Arnaud, Samuel, 74100 Annemasse (FR); Catherin, Gilles, 01630 Saint Genis Pouilly (FR)
(74) Representative: Hepp, Dieter

(57) **Abstract**

The present invention is related to a printed article comprising a substrate, an ink layer of a traditional offset ink being provided on at least one surface of said substrate, and a lacquer layer being provided on each of said ink layers, characterised in that the article further comprises as a solvent one or more compounds which do not significantly absorb radiation in the region of from 240 nm to 400 nm, and a photoinitiator which is poorly soluble in said solvent, and to a process for preparing said printed article.

## Description

This invention relates to a new coating for substrates such as board packages which is obtainable by the use of a specific traditional offset ink and a specific lacquer in an in-line varnishing process, and to a process of varnishing substrates in line.

Packaging materials such as board packages are commonly printed by means of the offset-printing process. This process is particularly suitable for such type of substrates since due to the indirect transfer of the ink from the printing plates to the substrate the rather sensitive plates do not come into direct contact with the rough surface of the substrate, resulting in a longer serviceability of the printing machines.

It is pointed out that the present invention is only related to traditional offset inks and not to UV curable inks. UV curable inks are used for in line varnishing processes since they can be cured with radiation before varnishing. However, for certain applications the use of UV curable inks is not advisable due to the higher costs involved with the use of UV curable inks. Therefore, in the context of the present invention, the term "traditional offset ink" comprises any offset inks which are not UV curable offset inks.

Traditional offset Inks to be used in an offset-printing process have to meet certain criteria. In order to allow good printing, those inks should be viscous and adhesive, i.e. providing a certain tack, without solidifying within the printing machine. In general, traditional offset inks are composed of a pigment which is not soluble in the wetting medium used in the offset-printing process, a binder which is soluble in the solvent used in the ink and is preferably a hard resin such as a rosin resin, a film forming agent such as linseed oil or alkyd resins providing mechanical resistance to the final print, a solvent such as a mineral oil which should readily evaporate from the final print or penetrate into the substrate, as well as certain other additives.

Once printed, substrates such as board packages are frequently overprinted with a lacquer layer in order to achieve several effects. On the one hand, that lacquer layer is designed to protect the underlying print against environmental influences. On the other hand, by means of said overlying lacquer layer the visual effects of the print are enforced by providing a glossy or matt effect.

For the lacquer layer there can be used various compositions. Preferred are lacquers which can be cured by means of ultraviolet (UV) radiation, such as lacquers being composed of acrylated species. In order to achieve the increase of the gloss of the print the varnish must not be too viscous. However, when applied to a porous material, with low viscosity varnishes a problem of soak-in can arise. Also, the glueability and scuff and rub resistance of the varnish have to be chosen in dependence of the properties the final coating consisting of the print and the lacquer layer should exhibit. To meet this criteria, several varnish formulations are known in the art. A common formulation for a UV-curable varnish comprises, for example, one or a mixture of several acrylate resins such as bisphenol A epoxy acrylate resin and benzophenone as a photoinitiator.

There are several methods known in the art how the UV-curable varnish can be applied to the printed substrate. The majority of UV varnishing is carried out through a varnishing unit with an anilox roller. Also, varnishing via a dry-offset method is used. Usually the lacquer layer is applied to the printed substrate several hours after the traditional offset ink has been printed onto the substrate. This means that the ink is given a sufficient amount of time to dry, for example by evaporation of the solvent or by absorption of the solvent. Therefore, the lacquer layer is applied on a dry layer of ink, i.e. on a hard surface. This usually leads to good results with respect to the visual characteristics of the printed substrate, i.e. the final gloss is high and independent on the ink density variation across several areas of the print. Most of the time, the lacquer layer is applied on presses only dedicated to such varnishing operations. This process is called "off-line process".

Such an off-line process suffers from the disadvantage that the time required for conducting the entire process is rather long, due to the need to wait for the drying of the ink layer of a traditional offset ink. As a consequence, the productivity of said process is not very good. Therefore, it has been thought to apply the lacquer layer directly after the traditional offset ink has been applied onto the substrate in a single operation. Such a process is called "in-line process". Needless to say, the in-line process promises a much higher productivity than the off-line process due to the much shorter period of time required to finish a desired product. In an in-line process, the lacquer layer is applied on an ink layer of a traditional offset ink which is still wet (wet-on-wet process).

However, such an in-line process suffers from a severe drawback. The resulting gloss of the printed product is very uneven and shows a wide variation over different shades. Usually, the gloss of a product manufactured according to a wet-on-wet process is high on areas containing only a small amount of traditional offset ink, i.e. unprinted or low-printed areas, whereas the gloss is low on areas containing a large amount of traditional offset ink, such as dark hairs and shadows. The difference in gloss between those areas is so large that the overall visual effect of the printed product is not satisfactory and far from meeting the end-user requirements. For example, on areas containing a large amount of traditional offset ink the gloss may decrease by around 50% in comparison to the gloss exhibited by areas containing only a small amount of traditional offset ink.

It was the object of the present invention to provide a coating for a substrate such as board packages comprising an ink layer of a traditional offset ink and a lacquer layer applied over said ink layer, wherein said coating can be applied in an in-line process and exhibits much better visual characteristics with respect to gloss in comparison to similar coatings of the art which are prepared in an in-line process.

Quite surprisingly, it has been found that by carefully choosing the solvent of the traditional offset ink and the photoinitiator of the lacquer to be varnished on top of the ink layer a coating can be obtained in an in-line process which does not exhibit differences in gloss of the various areas as severe as in conventional coatings which are prepared according to an in-line process.

Therefore, the present invention relates to a printed article comprising a substrate, at least one ink layer of a traditional offset ink being provided on at least one surface of said substrate, and a lacquer layer being provided on each of said present ink layers, characterised in that the article further comprises as a solvent one or more compounds which do not significantly absorb radiation in the region of from 240 nm to 400 nm, and a photoinitiator which is poorly soluble in said solvent.

According to a preferred embodiment of the present invention, said solvent is one or a mixture of mineral oils each having a content of aromatic components of not more than 6 % by weight, preferably not more than 1 % by weight, based on the total weight of said respective mineral oil.

According to a further preferred embodiment of the present invention, as a solvent is used a mixture of two different mineral oils, the first mineral oil comprising 0-25%, preferably 25%, by weight of naphthenic hydrocarbon components, 74-100%, preferably 74 % by weight of paraffinic hydrocarbon components, and 0-1%, preferably 1% by weight of aromatic hydrocarbon components, and said second mineral oil comprising 33-58%, preferably 58 % by weight of naphthenic hydrocarbon components, 36-66%, preferably 36 % by weight of paraffinic hydrocarbon components, and 1-6 %, preferably 6 % by weight of aromatic hydrocarbon components.

According to a further preferred embodiment of the present invention, the ratio of said first mineral oil to said second mineral oil is from 1:1 to 1: 1.25.

According to a further preferred embodiment of the present invention, said photoinitiator which is poorly soluble in the solvent is a derivative of benzophenone, particularly p-phenyl benzophenone.

According to a further preferred embodiment of the present invention, the substrate is a board package.

Furthermore, the present invention relates to a process for manufacturing a printed article as defined above in an in-line varnishing process, said process comprising the steps of:
a) applying a traditional offset ink on the surface of a substrate by means of an offset-printing process, said ink only comprising as a solvent one or more compounds which do not significantly absorb radiation in the region of from 240 nm to 400 nm,
b) applying onto the wet ink layer a lacquer layer forming composition comprising a photoinitiator which is poorly soluble in the solvent used in the ink,
c) curing by means of UV radiation.

The present invention also relates to a printed article obtainable by the above process.

The present invention also relates to the use of a traditional offset ink comprising as a solvent only compounds, particularly the above mentioned mineral oils or mixture of two mineral oils, which do not significantly absorb radiation in the region of from 240 nm to 400 nm for manufacturing an article as defined above having improved gloss characteristics.

The present invention also relates to the use of a mineral oil comprising 25% by weight of naphthenic hydrocarbon components, 74 % by weight of paraffinic hydrocarbon components, and 1% by weight of aromatic hydrocarbon components in a traditional offset ink for manufacturing the above defined article having improved gloss characteristics.

The present invention also relates to the use of a mineral oil comprising 58% by weight of naphthenic hydrocarbon components, 36 % by weight of paraffinic hydrocarbon components, and 6% by weight of aromatic hydrocarbon components in a traditional offset ink for manufacturing the above defined article having improved gloss characteristics.

The present invention also relates to the use of a lacquer layer forming composition comprising a benzophenone derivative, particularly p-phenyl benzophenone as a photoinitiator for manufacturing the above defined article having improved gloss characteristics.

The present invention also relates to the use of a benzophenone derivative, particularly p-phenyl benzophenone as a photoinitiator for manufacturing the above defined article having improved gloss characteristics.

The present invention also relates to the use of the above defined mineral oil or mixture of mineral oils in combination with the above defined lacquer layer forming composition for manufacturing the above defined article having improved gloss characteristics.

The present invention will hereinafter be described in more detail.

The present invention is based on the finding that the variation of gloss in conventional coatings prepared by an in-line varnishing process is linked to the chemical nature of the traditional offset ink and the lacquer layer forming composition used in said process. By using a traditional offset ink only comprising as a solvent one or more compounds which do not significantly absorb radiation in the region of from 240 nm to 400 nm and a photoinitiator in the lacquer layer forming composition which is poorly soluble in the solvent used in the traditional offset ink, the variation of gloss can be significantly lessened, resulting in printed articles meeting much more the end-user requirements than the printed articles conventionally available by the in-line varnishing process. The respective ingredients, solvents and photoinitiator, are present and detectable in the final printed article, since in the case of the mineral oils they are not converted or in the case of the photoinitiator they are not completely consumpted during the process of manufacturing the final printed article.

The in-line varnishing process of the present invention is carried out as known in the art on equipment commonly used for that process.

Thus, in a first step, the desired substrate is printed on at least one of its surfaces by means of an offset-printing process, frequently also called lithographic printing process. Any of the commonly used offset-printing processes such as the web or sheet-fed process can be used for the process according to the present invention. Reference is made in this respect to The Printing ink manual, R.H. Leach (ed.), 5^{th} ed., Blueprint, London 1993, p. 15-33, the content of which is incorporated herewith by reference. In the process according to the present invention, the substrate may be printed with one single traditional offset ink or with various different traditional offset inks, as known in the art. In the process according to the present invention, printing with up to six different colours is preferred.

With respect to the traditional offset inks, in the process according to the present invention coldset inks, i.e. inks which are dried without application of external energy, as well as heatset inks, i.e. inks which are dried by application of external energy such as heat or radiation, or a combination of both types of inks can be used. Reference is made in this respect to The Printing ink manual, R.H. Leach (ed.), 5^{th} ed., Blueprint, London 1993, p. 342-452, the content of which is incorporated herewith by reference.

It has now been surprisingly found that the choice of solvents used in the traditional offset inks of the present invention exerts a great influence on the variation in gloss achieved in the final product. Therefore, according to the present invention, as a solvent only compounds may be used which do not significantly absorb radiation in the region of from 240 nm to 400 nm, i.e. in the near UV region. According to the present invention, the term "not significantly absorb" means that the respective compound exhibits an absorption peak at a wavelength in the region of from 240 nm to 400 nm, i.e. in the near UV region, said absorption peak having a maximal coefficient of extinction ε of not more than 0,5 L/g cm, preferably of not more than 0,3 l/g cm.

ε is calculated according to Lambert-Beer's law: A = L C ε
wherein
A is the absorbance
C is the concentration of the respective compound in the solution in g/L
L is the thickness of the layer, i.e. the path length of the sample in cm.

In the context of the present invention, solvents are different from co-solvents. Solvents are ingredients being present in an amount of at least 40% by weight of the entire amount of solvents and co-solvents in the traditional offset ink of the present invention, whereas co-solvents are ingredients being present in an amount of at most 10% by weight of the entire amount of solvents and co-solvents in the traditional offset ink of the present invention, serving only to improve the solvency power of the solvents.

A particularly preferred traditional offset ink according to the present invention comprises three components, namely a grinding medium, a pigment and a let-down component, which will be described in the following in more detail.

The grinding medium is designed to be mixed with the pigment in advance of a grinding process. After the grinding of the mixture of these two components, the let-down component is added to obtain the final traditional offset ink.

The grinding medium comprises an offset varnish, mineral oils as solvents, and optionally a co-solvent and other additives such as antioxidants or waxes.

The offset varnish comprises as ingredients hard resins, mineral oils as solvents and a drying oil. Hard resins are derivatives of the naturally occurring rosin resin (colophony) and can be obtained from the latter by conversion with, for example, ZnO yielding modified rosin resins having higher melting points than the naturally occurring resins. Frequently they are further modified by reaction with, e.g. maleic anhydride, fumaric acid or phenolic resins. Hard resins are usually practically insoluble in water, but soluble in many organic solvents. This characteristic makes them useful for the traditional offset inks of the present invention, since due to the very limited solvent power of the mineral oils used as solvents only resins which are very soluble in organic solvents can be considered. Hard resins improve the mechanical characteristics of the final traditional offset ink such as hardness and resistance to abrasiveness as well as the gloss of the final traditional offset ink. In the traditional offset inks of the present invention, the hard resin preferably is a resin from the group consisting of rosin-modified phenolic resins, rosin-modified maleic resins or rosin esters. In the art there are available a higher number of different grades of such resins. In general, any of such resins which are soluble in the mineral oils used as solvents in the traditional offset inks of the present invention can be considered. Particularly preferred hard resins according to the present invention are the resins sold under the trade names Sylvaprint MP 6364 and Sylvaprint MP 6348 by the company Arizona Chemical.

The choice of certain solvents in the traditional offset inks of the present invention is crucial. Mineral oils are frequently used as solvents in traditional offset inks since these compounds are suitable for meeting the requirements imposed by the offset printing process. In general, mineral oils are distillates of naturally occurring petroleum. They are composed of three different types of hydrocarbons, i.e. aromatic, naphthenic (saturated cyclic) and paraffinic (saturated aliphatic) hydrocarbons. The mineral oils commonly used in traditional offset inks can be characterised by their boiling range and their content of aromatic ingredients. High boiling petroleum distillates having boiling ranges of from 240-270°C, 260-290°C or 280-320°C are the most frequently used minerals oils in such inks. Those mineral oils are available in three different types, each having another aromatic content. Mineral oils having an aromatic content of more than 16% by weight, based on the total weight of the mineral oil, are defined as regular mineral oils. Mineral oils having an aromatic content of 5-6% by weight, based on the total weight of the mineral oil, are defined as low aromatic or low odour mineral oils. Mineral oils having an aromatic content of less than 1% by weight, based on the total weight of the mineral oil, are defined as aromatic free mineral oils. It is known that characteristics such as the solvency power of the mineral oil as well as stability and drying speed of the traditional offset ink can be influenced by the boiling range and the aromatic content of the mineral oil used.

Low aromatic or aromatic free mineral oils do not significantly absorb radiation in the region of from 240 nm to 400 nm, i.e. in the near UV region. Therefore, they are particularly useful as solvents in the traditional offset inks of the present invention. Especially preferred mineral oils as solvents for the traditional offset inks of the present invention are the mineral oils with the trade names PKWF 4/7 AF, PKWF 6/9 AFN sold by Haltermann, Risella 717 sold by Shell and Nyflex 8120 sold by Nynas having the following compositions:

| Oil | Boiling range | Composition | | |
|---|---|---|---|---|
| | | Naphthenic components (%) | Paraffinic components (%) | Aromatic components (%) |
| PKWF 4/7 AF | 240 - 270 °C | <1 | 99 | <1 |
| PKWF 6/9 AFN | 260 - 290 °C | 25 | 74 | 1 |
| Rissela 717 | | 33 | 66 | 1 |
| Nyflex 8120 | 230 - 280 °c | 58 | 36 | 6 |

The Percentages indicated in the table are % by weight, based on the total weight of the mineral oil.

In the traditional offset inks of the present invention the above mentioned mineral oils can be used alone or in combination of two or more of the above mineral oils. According to an especially preferred embodiment of the present invention, a mixture of a non-aromatic mineral oil such as PKWF 6/9 AFN and a low aromatic mineral oil such as Nyflex 8120 is used.

Furthermore, the offset varnish comprises a drying oil. A drying oil undergoes an oxygen-induced free-radical polymerisation after the traditional offset ink has been applied to the substrate, thus forming elastic films or skins. By this process, a solid ink is formed on the substrate. According to the present invention, any conventional drying oil can be used. In general, such drying oils are glycerides or triglycerids of fatty acid, e.g. linseed oil, tung oil (china wood oil), soja oil, oiticica oil or dehydrated castor oil. Especially preferred is linseed oil.

The amount of the various ingredients used in the offset varnish can be easily adjusted by a man skilled in the art according to end-user requirements. According to the present invention, a preferred ratio of the ingredients in the offset varnish is as follows: 30-50, preferably 35-45 % by weight of hard resin components; 30-50, preferably 35-45 % by weight of mineral oils, and the balance, preferably 15-25 % by weight, of a drying oil. The weight percentages are given with respect to the entire weight of the offset varnish. It is furthermore preferred to use a mixture of a low aromatic and a non-aromatic mineral oil with a preferred ratio of low-aromatic mineral oil to non-aromatic mineral oil of from 1:1 to 1,25: 1.

The hard resin components are dissolved in the mineral and the drying oils at elevated temperatures, for example at temperatures of from 100 to 200°C, preferably of from 150 to 200°C, in order to obtain a solution of the offset varnish.

In order to obtain the grinding medium, the above solution of the offset varnish is mixed with further solvents, and optionally a co-solvent and other additives such as antioxidants or waxes. As solvents, also here only compounds may be used which do not significantly absorb radiation in the region of from 240 nm to 400 nm, i.e. in the near UV region. According to the present invention, the low-aromatic or non-aromatic mineral oils used in the offset varnish are also preferably used to make the grinding medium. It is also for the grinding medium preferred to use a mixture of a low aromatic and a non-aromatic mineral oil. In this case, a preferred ratio of low-aromatic mineral oil to non-aromatic mineral oil lies in the range of from 1:1 to 1: 2, preferably 1: 1,5.

According to the present invention, the grinding medium preferably contains further ingredients such as an alkyd resin, an antioxidant or wax and, if necessary, a co-solvent.

Alkyd resins are useful because of their pigment wetting properties and their positive effect on stability and gloss of the traditional offset ink. Since they may adversely influence the drying of the traditional offset ink, the amount of alkyd resins in the traditional offset ink should only be as high as necessary to achieve the above positive effects. According to the present invention, the final traditional offset ink contains not more than 10 % and preferably of from 1 to 5 % by weight of alkyd resins. Any alkyd resin commonly used for this purpose is also useful for the grinding medium of the traditional offset inks of the invention. Long-oil alkyd resins such as linseed alkyds or soya alkyds are particularly preferred. An especially preferred alkyd resin according to the present invention is a linseed alkyd resin commercially available under the trade name Setalin V408 from Akzo Nobel.

In order to reduce the potential of the traditional offset ink to form skins while being in a storing container, the traditional offset inks of the invention preferably contain in the grinding medium a little amount of an anti-oxidant. Since an anti-oxidant adversely influences the drying properties of the traditional offset ink, only a very little amount thereof should be included. Preferably, the amount of anti-oxidant in the final traditional offset ink should not exceed 2 %, more preferably lie in a range of from 0,1 to 1,5 % by weight, based on the weight of the entire final traditional offset ink. Any commonly used anti-oxidant may be included into the traditional offset inks of the invention. Examples are Oximes such as methyl ethyl ketoxime, substituted phenols such as butylated hydroxy toluene, or Quinones such as hydroquinone. From those compounds, Quninones and especially hydroquinone are the most preferred ones according to the present invention.

In order to provide good slip characteristics, scratch and rub resistance to the final traditional offset ink, the traditional offset inks of the invention may further contain a wax component in the grinding medium. Any commonly used wax can also be incorporated into the traditional offset inks of the invention. Examples are polyethylene, polytetrafluoroethylene or synthetic paraffine waxes. An especially preferred wax according to the present invention is a micronised polyethylene/Fischer-Tropsch wax, i.e. a synthetic wax, which is sold under the trade name Polysperse by Eastman.

Due to the low solvency power of the mineral oils used as solvents in the traditional offset inks of the present invention, the addition of further ingredients such as alkyd resins, anti-oxidants or waxes may require the incorporation of a co-solvent into the traditional offset inks of the invention. Since such co-solvents influence the characteristics of the traditional offset ink such as viscosity, they should only be used in amounts as little as necessary to achieve the dissolution of the other ingredients. Usually, solvents having alcohol or ester functional groups are use for that purpose. According to the present invention, a particularly preferred co-solvent is tridecanol.

In the traditional offset inks of the present invention, the grinding medium makes up from 50 to 70 % by weight of the total final traditional offset ink. The grinding medium preferably comprises of from 70 to 90 % by weight, based on the total amount of the grinding medium, of the offset varnish described above, resulting in amounts of from around 40 to 60% of the offset varnish used in the grinding medium in the final traditional offset ink. The grinding medium further preferably comprises, in addition to the mineral oils present in the offset varnish, of from 1 to 10 % by weight, based on the total amount of the grinding medium, of the mineral oils described above. The grinding medium further preferably comprises of from 2 to 5 % by weight, based on the total amount of the grinding medium, of the alkyd resin described above, resulting in an amount of from around 1 to 3 % of the alkyd resin in the final traditional offset ink. The grinding medium further preferably comprises of from 1 to 3 % by weight, based on the total amount of the grinding medium, of the anti-oxidant described above, resulting in an amount of from around 0,5 to 2 % of the anti-oxidant in the final traditional offset ink. The grinding medium further preferably comprises of from 2 to 10 % by weight, based on the total amount of the grinding medium, of the wax described above, resulting in an amount of from around 1 to 8 % of the wax in the final traditional offset ink. The grinding medium further preferably comprises of from 2 to 6 % by weight, based on the total amount of the grinding medium, of the co-solvent described above, resulting in an amount of from around 1 to 4 % of the co-solvent in the final traditional offset ink.

The grinding medium is obtained by mixing the solution of the offset varnish prepared as described above with the other ingredients mentioned above.

The traditional offset inks of the present invention may contain any pigment commonly used in offset inks. They can be chosen by the man skilled in the art according to the end-user requirements. A particularly preferred yellow pigment according to the present invention is sold under the trade name Irgalithe LBE. A particularly preferred red pigment according to the present invention is sold under the trade name Irgalithe SMA. A particularly preferred blue pigment according to the present invention is sold under the trade name Cyanine J500. A particularly preferred black pigment according to the present invention is sold under the trade name Printex 300.

The traditional offset inks of the present invention preferably contain an amount of pigment in the range of from 10 to 30 % by weight, preferably 15 to 25 % by weight, based on the total weight of the final traditional offset ink.

The pigment is added to the grinding medium described above. The resulting composition is then grinded. The grinding process may be carried out according to any conventional grinding process used for that purpose, such as, for example, by use of a bead mill, a three-roll mill or a combination of both. The pigments are grinded until the particle size thereof is less than 10 µm.

The let-down component used in the traditional offset inks of the invention comprises the offset varnish described above together with a further amount of the solvents useful for the present invention, and optionally further additives such as colour pastes and/or dryer compounds. As solvents in the let-down component also low-aromatic and non-aromatic mineral oils as described above are especially preferred. It is also for the let-down component preferred to use a mixture of a low aromatic and a non-aromatic mineral oil. In this case, a preferred ratio of low-aromatic mineral oil to non-aromatic mineral oil lies in the range of from 1:1 to 1: 3. The let-down component may also comprise colour pastes such as a reflex blue paste sold under the designation A5H-R31. Also, the let-down component may contain a small amount of a dryer component. Such compounds are usually metal catalysts accelerating the oxygen-induced polymerisation of the drying oil present in the traditional offset ink. Any dryer compound commonly used in offset inks can be considered for the traditional offset inks of the invention. Examples are organic salts of cobalt or manganese.

Preferably, the let-down component makes up of from 10 to 30 % by weight of the entire final traditional offset ink. Preferably, the let-down component comprises of from 40 to 80 % by weight of the offset varnish described above, resulting in amounts of from around 4 to 20% of the offset varnish used in the let-down component in the final traditional offset ink. The let-down component further preferably comprises, in addition to the mineral oils present in the offset varnish, of from 1 to 10 % by weight, based on the total amount of the let-down component, of the mineral oils described above. The let-down component further preferably comprises of from 0 to 15 % by weight, based on the total amount of the let-down component, of the colour pastes described above. The let-down component further preferably comprises of from 0 to 5 % by weight, based on the total amount of the let-down component, of the dryer compounds described above.

The let-down component is obtained by mixing the respective components described above. Thereafter, the final traditional offset ink can be obtained by adding the let-down component to the grinded composition of the grinding medium and the pigment.

The above described traditional offset ink is applied in a first step by means of an offset printing process mentioned above to a desired substrate. Although board package, i.e. carton board, is the substrate which is the most preferred one according to the present invention, it is understood that any other substrate commonly printed by means of an offset-printing process, such as paper or metal, can be used in the process according to the present invention. According to the present invention, either one or any of the surfaces of the substrate may be printed.

As mentioned in the description of the background of the invention, printed substrates are often overprinted with a lacquer layer in order to achieve several effects. On the one hand, that lacquer layer is designed to protect the underlying print against environmental influences. On the other hand, by means of said overlying lacquer layer the visual effects of the print are enforced by providing a glossy or matt effect.

The present invention only deals with UV curable lacquer layers. Such lacquer layers are described in the art, for example in The Printing ink manual, R.H. Leach (ed.), 5^{th} ed., Blueprint, London 1993, p. 636-677, the content of which is incorporated herewith by reference.

There are known several methods to apply the lacquer layer onto the printed substrate, such as by means of a varnishing unit having preferably anilox rollers, by means of roller coating, by means of a coating head, by means of a dry-offset method either via the damping system or via a printing plate or by means of lithography of letterpress, the dry-offset method being the most commonly used process. The above application methods can be carried out by using one of the printing units, or by utilising so-called in-line end-of-the press coating heads. According to the present invention, any of the above methods for applying the lacquer layer onto the printed substrate may be used.

In most cases, the lacquer layer has hitherto been applied onto a printed substrate off-line, i.e. after the traditional offset ink was given sufficient amount of time to dry. Depending on the traditional offset ink used, the amount of time required for drying may be in the range of from a few minutes to several hours. In order to ascertain the substantial dryness of the traditional offset ink before application of the lacquer layer, the latter layer has only been applied onto the printed substrate several hours after the printing process. Although the commercial advantages of an in-line varnishing process have been readily recognised (see e.g. The Printing ink manual, R.H. Leach (ed.), 5^{th} ed., Blueprint, London 1993, p. 667), the severe difficulties in achieving acceptable gloss characteristics of the final product by means of an in-line process have prevented a wider use of such an in-line process.

In the process according to the present invention, the lacquer layer is applied in-line directly after the substrate has been printed via an offset-printing process. Directly in this respect means that the traditional offset ink is not given a sufficient amount of time to dry after being applied to the substrate, so that the lacquer layer is applied onto the printed substrate while the traditional offset ink is still wet. Therefore, the process according to the present invention may be described as a wet-on-wet coating process. If more than one surface of the substrate have been printed in the first step, then any of the printed surfaces is coated with the lacquer layer.

According to the present invention, any UV-curable varnish composition commonly used in this field may be used for generating the lacquer layer of the products of the invention, provided that a specific photoinitiator as described below is used therein. The composition can be readily chosen by the man skilled in the art in view of the end-user requirements imposed on the product to be made. Thus, a UV-curable varnish composition useful in the present invention comprises a prepolymer, a diluent, a specific photoinitiator as will be described below, a co-initiator, and optionally additives such as surfactants, waxes or perfumes.

The prepolymer component will polymerise upon radiation with UV light. Although cationic polymerising species are known, commonly free radical polymerising prepolymers are the most frequently used components in this field and also preferred according to the present invention. Any of the known prepolymers can be considered for the purposes of this invention. The most preferred species are acrylated species such as epoxy acrylates, polyurethane acrylates or polyester acrylates.

In order to adjust the viscosity of the composition or to solubilise the prepolymer or to improve the pigment wetting characteristics of the composition, preferably diluents are added thereto. Useful for this purpose are non-reactive diluents which either penetrate into the substrate after the application of the lacquer layer or remain in said layer serving as plasticisers. Examples for such diluents are high boiling esters, highly branched alcohols or alkyl phosphates. However, according to the present invention more preferably used are diluents which have functional groups giving them the ability to participate in the polymerisation process by serving as co-polymers. Useful for this purpose are monofunctional monomers such as isodecyl acrylate (IDA) or phenoxy ethyl acrylate (PEE), difunctional monomers such as 1-4-butane diol diacrylate (BDDA), poylethylene gylcol diacrylate (PEGDA) or tripropylene glycol diacrylate (TPGDA), trifunctional monomers such as pentaerythritol triacrylate (PETA) or trimethylol propane triacrylate (TMPTA) or monomers on the basis of glycerol, or higher functional monomers on the basis of acrylate moieties. According to the present invention, trifunctional monomers such as TMPTA are particularly preferred.

The crucial component of the UV-curable varnish compositions of the invention is the photoinitiator system. Commonly, species which readily undergo a Norrish I or Norrish II defragmentation upon being irradiated with UV light are used in the field. For species undergoing primarily a Norrish II defragmentation, it is necessary to add a co-initiator in order to ascertain the efficiency of the photoinitiator. Hydrogen donors are frequently used for that purpose, and any compound having sufficiently acidic H atoms will be considered by the man skilled in the art. Examples are amines such as tertiary or secondary amines, for example N-methyl diethanolamine (MDEA).

It has now been found that by using the above described traditional offset inks in combination with a UV-curable composition comprising specific photoinitiators products exhibiting favourable gloss characteristics can be obtained. The photoinitiators to be used according to the present invention have to be poorly soluble in the solvents used in the traditional offset ink. Under poorly soluble according to the present invention is to be understood that the compound does not dissolve in those solvents in absence of any other materials which could influence the solubility of the compound at room temperature such that a clear solution can be obtained. According to the present invention, as a photoinitiator there can be used a benzophenone derivative such as p-phenyl benzophenone, 2-methyl-1-[4-(methylthio) phenyl]-2-morpholino-1-propanone (sold under the trade name Irgacure 907), Darocure 1173C, Irgacure 369, Lucirin TPO, Irgacure 149, Irgacure 1300, Esacure KIP 100 F. According to the present invention, the use of p-phenyl benzophenone or 2-methyl-1-[4-(methylthio) phenyl]-2-morpholino-1-propanone (sold under the trade name Irgacure 907) or of a mixture of these two is preferred.

As mentioned above, the UV-curable varnish composition of the invention may further comprise additives such as surfactants, waxes or perfumes, which are commonly known to the man skilled in the art.

According to a preferred embodiment of the present invention, the UV-curable varnish composition comprises between 15 to 30 % by weight, preferably 18 to 25 % by weight, based on the weight of the entire UV-curable varnish composition, of the prepolymer; between 40 to 70 % by weight, preferably between 50 and 70 % by weight, based on the weight of the entire UV-curable varnish composition, of the diluent; between 1 to 10 % by weight, preferably between 2 and 7 % by weight, based on the weight of the entire UV-curable varnish composition, of the photoinitiator(s); between 1 to 10 % by weight, preferably between 5 to 10 % by weight, based on the weight of the entire UV-curable varnish composition, of the co-initiator; and the balance of additives such as surfactants or perfumes.

The ingredients of the UV-curable varnish composition are mixed together at room temperature until a complete dissolution of the photoinitiators in the medium has taken place. The thus prepared UV-curable varnish composition can be applied as described above onto the desired substrate.

After the UV-curable varnish composition has been applied as described above onto the substrate, curing is carried out according to any conventional method known to the man skilled in the art. For example, as a source for UV radiation may be used a mercury vapour lamp, either of the high pressure, medium pressure or low pressure type, the medium pressure type being the most preferred one. The lamp is fitted in a short distance above the target to be irradiated at some convenient position. For example, water-cooled lamps having a power of 140 W/cm may be used.

The products obtained by the in-line printing and varnishing process according to the present invention exhibit a significantly reduced variation of gloss between printed and not printed parts of the surface in comparison to products obtained in an-line process by not using the specific traditional offset inks and UV-curable varnish compositions.

The above offset-ink and the above UV varnish used for the above described in-line varnishing process can also be used for other applications, for example for a double-coating application. In a double-coating application, the ink layer is first applied to a substrate, thereafter another layer such as a layer of waterborne varnish is applied to the ink layer, followed by the application of a UV varnish on said another layer.

The present invention will be described below with respect to illustrating examples and comparison examples. Hereinafter, all given percentages are to be understood as weight percentages.

### Example 1

A traditional offset ink having yellow colour was prepared using the following ingredients:
a) Offset varnish

| **Trade name** | **Raw material type** | **%** |
|---|---|---|
| Sylvaprint MP 6364 | Resin | 20,5 |
| Sylvaprint MP 6348 | Resin | 20,5 |
| PKWF 6/9 AFN | Non aromatic mineral oil | 18,75 |
| Nyflex 8120 | Low aromatic mineral oil | 22,25 |
| Linseed oil | drying oil | 18 |
| *Total* | | *100* |

The oil components were mixed in a common reactor. The resin components were added hereto. The mixture was then heated at 180°C until the resin components were completely dissolved.
b) traditional offset ink

| **Trade name** | **Raw material type** | % |
|---|---|---|
| *Grinding medium* | | |
| Offset varnish | | 55 |
| Setalin V408 | Linseed alkyd | 2,5 |
| Hydroquinone 50% | Antioxidant compound | 1,4 |
| Tridecylic alcohol | Co-solvent | 2 |
| PKWF 6/9 AFN | Non aromatic mineral oil | 1,5 |
| Nyflex 8120 | Low aromatic mineral oil | 1 |
| Polysperse | Wax | 3 |

| *Pigment* | | |
|---|---|---|
| Irgalithe LBE | Yellow pigment | 13,5 |

| *Let-down component* | | |
|---|---|---|
| Offset varnish | | 15,8 |
| PKWF 6/9 AFN | Non aromatic mineral oil | 2,1 |
| Nyflex 8120 | Low aromatic mineral oil | 0,5 |
| | Orange paste | 0,5 |
| | Dryer compound | 1,2 |
| *Total* | | *100* |

The ingredients of the grinding medium were mixed. The pigment was added to this mixture. The resulting composition was grinded on a standard grinding machine. To the grinded paste obtained by this grinding process was added a mixture obtained by combining the ingredients of the let-down component. The ingredients were mixed to obtain the final traditional offset ink.

### Example 2

A traditional offset ink having red colour was prepared using the following ingredients:
a) Offset varnish
The offset varnish was prepared as described in example 1.
b) traditional offset ink

| **Trade name** | **Raw material type** | % |
|---|---|---|
| *Grinding medium* | | |
| Offset varnish | | 55,4 |
| Setalin V408 | Linseed alkyd | 2,5 |
| Hydroquinone 50% | Antioxidant compound | 1,4 |
| Tridecylic alcohol | Co-solvent | 3 |
| PKWF 6/9 AFN | Non aromatic mineral oil | 1,5 |
| Nyflex 8120 | Low aromatic mineral oil | 1 |
| Polysperse | Wax | 3 |

| *Pigment* | | |
|---|---|---|
| Irgalithe SMA | Red pigment | 19,5 |

| *Let-down component* | | |
|---|---|---|
| Offset varnish | | 6 |
| PKWF 6/9 AFN | Non aromatic mineral oil | 4 |
| Nyflex 8120 | Low aromatic mineral oil | 1,5 |
| | Dryer compound | 1,2 |
| *Total* | | *100* |

The ingredients of the grinding medium were mixed. The pigment was added to this mixture. The resulting composition was grinded on a standard grinding machine. To the grinded paste obtained by this grinding process was added a mixture obtained by combining the ingredients of the let-down component. The ingredients were mixed to obtain the final traditional offset ink.

### Example 3

A traditional offset ink having blue colour was prepared using the following ingredients:
a) Offset varnish
The offset varnish was prepared as described in example 1.
b) traditional offset ink

| **Trade name** | **Raw material type** | % |
|---|---|---|
| *Grinding medium* | | |
| Offset varnish | | 50 |
| Setalin V408 | Linseed alkyd | 2,5 |
| Hydroquinone 50% | Antioxidant compound | 1,4 |
| Tridecylic alcohol | Co-solvent | 3 |
| PKWF 6/9 AFN | Non aromatic mineral oil | 1,5 |
| Nyflex 8120 | Low aromatic mineral oil | 1 |
| Polysperse | Wax | 3 |

| *Pigment* | | |
|---|---|---|
| Cyanine J500 | Blue pigment | 18 |

| *Let-down component* | | |
|---|---|---|
| Offset varnish | | 14,2 |
| PKWF 6/9 AFN | Non aromatic mineral oil | 2,5 |
| Nyflex 8120 | Low aromatic mineral oil | 1,7 |
| | Dryer compound | 1,2 |
| *Total* | | *100* |

The ingredients of the grinding medium were mixed. The pigment was added to this mixture. The resulting composition was grinded on a standard grinding machine. To the grinded paste obtained by this grinding process was added a mixture obtained by combining the ingredients of the let-down component. The ingredients were mixed to obtain the final traditional offset ink.

### Example 4

A traditional offset ink having black colour was prepared using the following ingredients:
a) Offset varnish
The offset varnish was prepared as described in example 1.
b) traditional offset ink

| **Trade name** | **Raw material type** | % |
|---|---|---|
| *Grinding medium* | | |
| Offset varnish | | 42 |
| Setalin V408 | Linseed alkyd | 2,5 |
| Hydroquinone 50% | Antioxidant compound | 1,4 |
| Tridecylic alcohol | Co-solvent | 2 |
| PKWF 6/9 AFN | Non aromatic mineral oil | 1,5 |
| Nyflex 8120 | Low aromatic mineral oil | 1 |
| Polysperse | Wax | 3 |

| *Pigment* | | |
|---|---|---|
| Printex 300 | Black pigment | 19,2 |

| *Let-down component* | | |
|---|---|---|
| Offset varnish | | 13,7 |
| PKWF 6/9 AFN | Non aromatic mineral oil | 2 |
| A5H-R31 | Reflex blue paste | 10,5 |
| | Dryer compound | 1,2 |
| *Total* | | *100* |

The ingredients of the grinding medium were mixed. The pigment was added to this mixture. The resulting composition was grinded on a standard grinding machine. To the grinded paste obtained by this grinding process was added a mixture obtained by combining the ingredients of the let-down component. The ingredients were mixed to obtain the final traditional offset ink.

### Example 5

A UV-curable varnish composition was prepared using the following ingredients:

| **Trade name** | **Raw material type** | % |
|---|---|---|
| TMPTA | Monomer (solvent) | 42 |
| Irgacure 907 | Photo-initiator | 2,5 |
| Phenylbenzophenone | Photo-initiator | 3 |
| Epoxy acrylate | Oligomer (Resin) | 21 |
| TMPTA | Monomer (solvent) | 23,96 |
| MDEA | Co-initiator | 6,5 |
| Amandol | Perfume | 0,02 |
| Dow PA 57 | Surfactant | 1 |
| Tego Foamex N | Surfactant | 0,02 |
| | | |
| *Total* | | 100 |

The ingredients were mixed and stirred until complete dissolution of the photoinitiators had occurred.

### Example 6: Preparation of conventional inks

Three conventional inks were prepared as follows. These inks differ from the inks of the present invention in that as a solvent a mineral oil having a higher absorption in the UV region was used:

| Oil | Boiling range | Composition | | |
|---|---|---|---|---|
| | | Naphthenic components (%) | Paraffinic components (%) | Aromatic components (%) |
| PKWF 4/7 | 240 - 270 °C | 66 | 22 | 12 |
| PKWF 6/9 | 260 - 290 °C | 66 | 22 | 12 |
| PKWF 28/31 | 280-310°C | 66 | 22 | 12 |

Using these mineral oils, the following conventional inks were prepared according to the procedure set forth in example 1:

### Example 6a (Comparative example):

a) Offset varnish

| **Trade name** | **Raw material type** | % |
|---|---|---|
| Sylvaprint MP 6364 | Resin | 21,4 |
| Sylvaprint MP 6348 | Resin | 21,4 |
| PKWF 6/9 | aromatic mineral oil | 38,9 |
| Linseed oil | drying oil | 18,3 |
| *Total* | | *100* |

b) ink

| **Trade name** | **Raw material type** | % |
|---|---|---|
| *Grinding medium* | | |
| Offset varnish | As defined in ex. 6a | 52,4 |
| Setalin V408 | Linseed alkyd | 2,5 |
| Hydroquinone 50% | Antioxidant compound | 1,4 |
| Tridecylic alcohol | Co-solvent | 2 |
| PKWF 6/9 | aromatic mineral oil | 4 |
| Polysperse | Wax | 3 |

| *Pigment* | | |
|---|---|---|
| Irgalithe SMA | Red pigment | 19,5 |

| *Let-down component* | | |
|---|---|---|
| Offset varnish | As defined in ex. 6a | 5,2 |
| PKWF 6/9 | aromatic mineral oil | 8,8 |
| | Dryer compound | 1,2 |
| *Total* | | *100* |

### Example 6b (Comparative example):

a) Offset varnish

| **Trade name** | **Raw material type** | **%** |
|---|---|---|
| Sylvaprint MP 6364 | Resin | 21,9 |
| Sylvaprint MP 6348 | Resin | 21,9 |
| PKWF 4/7 | aromatic mineral oil | 37,8 |
| Linseed oil | drying oil | 18,4 |
| *Total* | | *100* |

b) ink

| **Trade name** | **Raw material type** | **%** |
|---|---|---|
| *Grinding medium* | | |
| Offset varnish | As defined in ex. 6b | 55,3 |
| Setalin V408 | Linseed alkyd | 2,5 |
| Hydroquinone 50% | Antioxidant compound | 1,4 |
| Tridecylic alcohol | Co-solvent | 2 |
| PKWF 4/7 | aromatic mineral oil | 5 |
| Polysperse | Wax | 3 |

| *Pigment* | | |
|---|---|---|
| Irgalithe SMA | Red pigment | 19,5 |

| *Let-down component* | | |
|---|---|---|
| Offset varnish | As defined in ex. 6b | 3,1 |
| PKWF 4/7 | aromatic mineral oil | 7 |
| | Dryer compound | 1,2 |
| *Total* | | *100* |

### Example 6c (Comparative example):

a) Offset varnish

| **Trade name** | **Raw material type** | **%** |
|---|---|---|
| Sylvaprint MP 6364 | Resin | 21 |
| Sylvaprint MP 6348 | Resin | 21 |
| PKWF 28/31 | aromatic mineral oil | 38,9 |
| Linseed oil | drying oil | 19,1 |
| *Total* | | *100* |

b) ink

| **Trade name** | **Raw material type** | % |
|---|---|---|
| *Grinding medium* | | |
| Offset varnish | As defined in ex. 6c | 56,4 |
| Setalin V408 | Linseed alkyd | 2,5 |
| Hydroquinone 50% | Antioxidant compound | 1,4 |
| Tridecylic alcohol | Co-solvent | 2 |
| PKWF 28/31 | aromatic mineral oil | 5 |
| Polysperse | Wax | 3 |

| *Pigment* | | |
|---|---|---|
| Irgalithe SMA | Red pigment | 19,5 |

| *Let-down component* | | |
|---|---|---|
| PKWF 28/31 | aromatic mineral oil | 9 |
| | Dryer compound | 1,2 |
| *Total* | | *100* |

### Example 7: Preparation of a conventional UV-curable varnish (Comparative example)

A conventional UV-curable varnish was prepared as outlined in example 5, but with benzophenone as a photoinitiator:

| **Trade name** | **Raw material type** | % |
|---|---|---|
| TMPTA | Monomer (solvent) | 42 |
| Irgacure 907 | Photo-initiator | 2,5 |
| benzophenone | Photo-initiator | 4 |
| Epoxy acrylate | Oligomer (Resin) | 20 |
| TMPTA | Monomer (solvent) | 23,96 |
| MDEA | Co-initiator | 6,5 |
| Amandol | Perfume | 0,02 |
| Dow PA 57 | Surfactant | 1 |
| Tego Foamex N | Surfactant | 0,02 |
| | | |
| *Total* | | 100 |

The so prepared varnish has the same viscosity and reactivity as the varnish according to example 5.

### Example 8: In line varnishing of a board package

The inks and lacquer layers were printed on a Roland Favorit 2 Colours offset machine at a printing speed of 5000 sheets per hour. As a substrate, hermicoat (grey verso, 300 g/m²) as used. The ink was printed via the first printing group at a density of 1,8 using a fountain solution containing as a fountain additive Dampstar 4.6 (sold by Solco) in a dosage of 3% and having a concentration of IPA of 6%. Thereafter, the UV-curable varnish was overprinted in-line via the inking rollers of the second printing group of the machine (dry-offset process) and cured under UV radiation (2 lamps, 140 W/cm, water-cooled).

The following results were obtained:

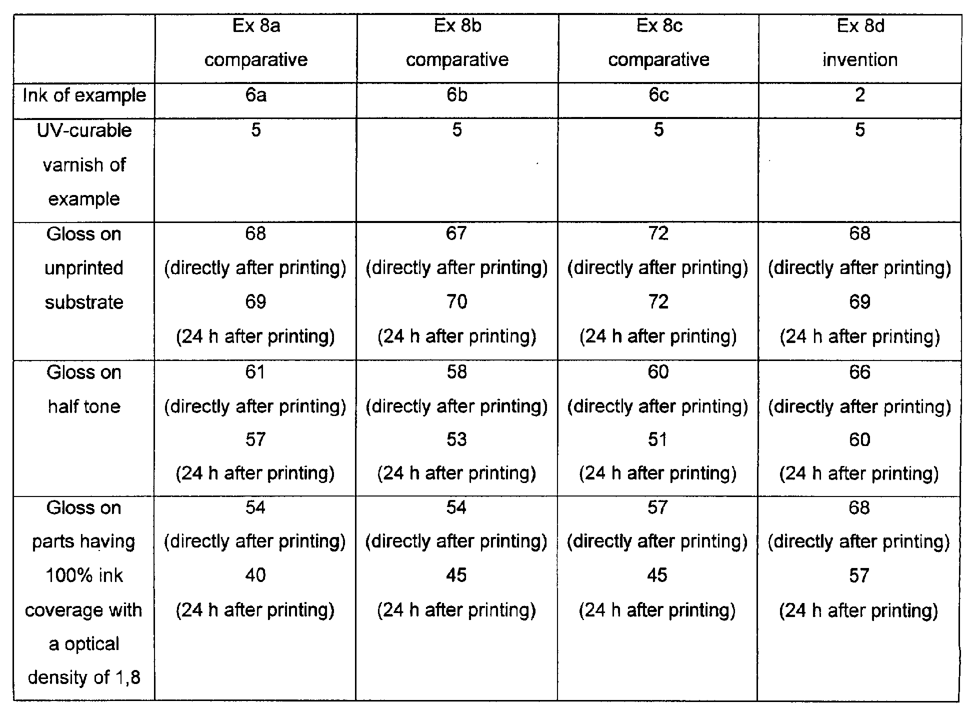

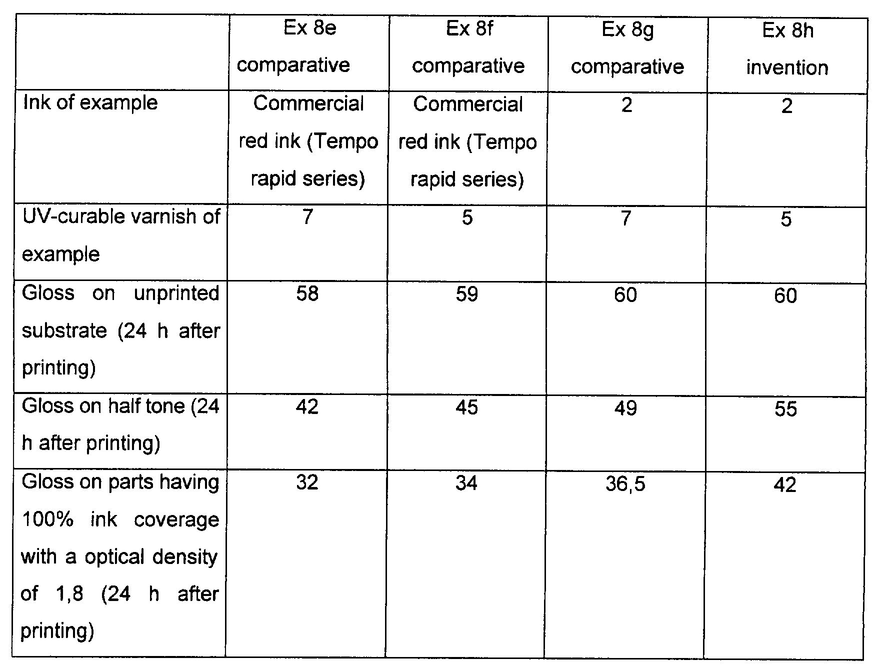

The commercial inks from the TEMPO rapid series are inks in which as a solvent a mixture of mineral oils PKWF 28/31 and PKWF 6/9 is used.

As can be seen from example 8, the use of a traditional offset ink according to the present invention, i.e. having the specific mineral oils as solvents, leads to significant improvement of the gloss on half tone areas and especially on areas having 100% ink coverage (examples 8a to 8d). Since the gloss on the unprinted substrate remains substantially the same, the difference in gloss between printed and unprinted areas obtained according to invention example 8d is markedly decreased in comparison to comparative examples 8a to 8c.

Furthermore, as can be seen from examples 8e to 8h, this effect can be improved by using the UV-curable varnish according to the present invention, i.e. having the specific photoinitiator. A comparison between examples 8e and 8f, and examples 8g and 8h, respectively shows that by using the varnish according to example 2 the gloss on half tone areas and areas with 100% ink coverage is further increased. Since the gloss on the unprinted substrate remains substantially the same, the difference in gloss between printed and unprinted areas is markedly decreased. From examples 8e to 8h it can be seen that the best results are obtained with the invention example 8h, whereas the worst results are obatined with example 8e using an ink and a UV-curable varnish which are not according to the present invention.

This clearly shows that by using the traditional offset inks and UV-curable varnish compositions of the present invention much better results with respect to gloss can be obtained in an in-line varnishing process.

## Claims

1. Printed article comprising a substrate, at least one ink layer of a traditional offset ink being provided on at least one surface of said substrate, and a lacquer layer being provided on each of said present ink layers, **characterised in that** the article further comprises as a solvent one or more compounds which do not significantly absorb radiation in the region of from 240 nm to 400 nm, and a photoinitiator which is poorly soluble in said solvent.

2. Article according to claim 1, **characterised in that** said solvent is one or a mixture of mineral oils each having a content of aromatic components of not more than 6 % by weight, based on the total weight of said respective mineral oil.

3. Article according to one of the claims 1 or 2, **characterised in that** said solvent is one or a mixture of mineral oils each having a content of aromatic components of not more than 1 % by weight, based on the total weight of said respective mineral oil.

4. Article according to any one of the claims 1 to 3, **characterised in that** as a solvent is used a mixture of two different mineral oils, the first mineral oil comprising from 0-25 % by weight of naphthenic hydrocarbon components, from 74 to 100 % by weight of paraffinic hydrocarbon components, and 0-1 % by weight of aromatic hydrocarbon components, and said second mineral oil comprising from 33-58 % by weight of naphthenic hydrocarbon components, from 36 to 66 % by weight of paraffinic hydrocarbon components, and 1-6 % by weight of aromatic hydrocarbon components.

5. Article according to any one of the claims 1 to 4, **characterised in that** as a solvent is used a mixture of two different mineral oils, the first mineral oil comprising 25% by weight of naphthenic hydrocarbon components, 74 % by weight of paraffinic hydrocarbon components, and 1% by weight of aromatic hydrocarbon components, and said second mineral oil comprising 58 % by weight of naphthenic hydrocarbon components, 36 % by weight of paraffinic hydrocarbon components, and 6 % by weight of aromatic hydrocarbon components.

6. Article according to any one of the claims 4 or 5, **characterised in that** the ratio of said first mineral oil to said second mineral oil is from 1:1 to 1: 1.25.

7. Article according to any one of the claims 1 to 6, **characterised in that** the photoinitiator which is poorly soluble in the solvent used in the ink is a benzophenone derivative.

8. Article according to claim 7, **characterised in that** the benzophenone derivative is p-phenyl benzophenone.

9. Article according to any one of the claims 1 to 8, **characterised in that** the substrate is a board package.

10. Process for manufacturing an article according to any one of the claims 1 to 9 in an in-line varnishing process, said process comprising the steps of:
a) applying a traditional offset ink on at least one surface of a substrate by means of an offset-printing process, said ink only comprising as a solvent one or more compounds which do not significantly absorb radiation in the region of from 240 nm to 400 nm,
b) applying onto the wet ink layer a lacquer layer forming composition comprising a photoinitiator which is poorly soluble in the solvent used in the ink,
c) curing by means of UV radiation.

11. Article, obtainable by a process according to claim 10.

12. Use of a traditional offset ink only comprising as a solvent one or more compounds which do not significantly absorb radiation in the region of from 240 nm to 400 nm for manufacturing an article according to any one of the claims 1 to 9 and 11 having improved gloss characteristics.

13. Use according to claim 12, wherein said solvent used in the ink is one or a mixture of mineral oils each having a content of aromatic components of not more than 6 % by weight, based on the total weight of said respective mineral oil.

14. Use according to claim 12 or 13, wherein said solvent used in the ink is one or a mixture of mineral oils each having a content of aromatic components of not more than 1 % by weight, based on the total weight of said respective mineral oil.

15. Use according to any one of the claims 12 to 14, wherein in said ink is used as a solvent a mixture of two different mineral oils, the first mineral oil comprising from 0-25 % by weight of naphthenic hydrocarbon components, from 74 to 100 % by weight of paraffinic hydrocarbon components, and 0-1 % by weight of aromatic hydrocarbon components, and said second mineral oil comprising from 33-58 % by weight of naphthenic hydrocarbon components, from 36 to 66 % by weight of paraffinic hydrocarbon components, and 1-6 % by weight of aromatic hydrocarbon components.

16. Use according to any one of the claims 12 to 15, wherein in said ink is used as a solvent a mixture of two different mineral oils, the first mineral oil comprising 25% by weight of naphthenic hydrocarbon components, 74 % by weight of paraffinic hydrocarbon components, and 1% by weight of aromatic hydrocarbon components, and said second mineral oil comprising 58 % by weight of naphthenic hydrocarbon components, 36 % by weight of paraffinic hydrocarbon components, and 6 % by weight of aromatic hydrocarbon components.

17. Use according to any one of claims 12 to 16, wherein the ratio of said first mineral oil to said second mineral oil within said ink is from 1:1 to 1: 1.25.

18. Use of a mineral oil comprising 25% by weight of naphthenic hydrocarbon components, 74 % by weight of paraffinic hydrocarbon components, and 1% by weight of aromatic hydrocarbon components in a traditional offset ink for manufacturing an article according to any one of the claims 1 to 9 and 11 having improved gloss characteristics.

19. Use of a mineral oil comprising 58% by weight of naphthenic hydrocarbon components, 36 % by weight of paraffinic hydrocarbon components, and 6% by weight of aromatic hydrocarbon components in a traditional offset ink for manufacturing an article according to any one of the claims 1 to 9 and 11 having improved gloss characteristics.

20. Use of a lacquer layer forming composition comprising a benzophenone derivative as a photoinitiator for manufacturing an article according to any one of the claims 1 to 9 and 11 having improved gloss characteristics.

21. Use according to claim 20, wherein said benzophenone derivative is p-phenyl benzophenone.

22. Use of a benzophenone derivative as a photoinitiator in a lacquer composition for manufacturing an article according to any one of the claims 1 to 9 and 11 having improved gloss characteristics.

23. Use according to claim 22, wherein said benzophenone derivative is p-phenyl benzophenone.

24. Use of a traditional offset ink according to any one of claims 12 to 17 in combination with a lacquer layer forming composition according to any one of claims 20 to 21 for manufacturing an article according to any one of the claims 1 to 9 and 11 having improved gloss characteristics.

25. Use of a mineral oil according to any one of claims 18 to 19 in combination with a benzophenone derivative according to any one of claims 22 to 23 for manufacturing an article according to any one of the claims 1 to 9 and 11 having improved gloss characteristics.
